Europäisches Patentamt

European Patent Office

Office européen des brevets

(19)

(11) Publication number: **0 364 297 B1**

(12) EUROPEAN PATENT SPECIFICATION

(45) Date of publication of patent specification: **26.01.94**   (51) Int. Cl.⁵: **H01M  4/96**, C04B 38/00

(21) Application number: **89310542.9**

(22) Date of filing: **13.10.89**

(54) **Porous carbon electrode substrates for fuel cells.**

(30) Priority: **14.10.88 JP 258740/88**

(43) Date of publication of application:
**18.04.90 Bulletin  90/16**

(45) Publication of the grant of the patent:
**26.01.94 Bulletin  94/04**

(84) Designated Contracting States:
**DE GB IT**

(56) References cited:
**US-A- 4 506 028**

(73) Proprietor: **KUREHA KAGAKU KOGYO
KABUSHIKI KAISHA
1-9-11, Nihonbashi, Horidome-cho
Chuo-ku Tokyo 103(JP)**

(72) Inventor: **Fukuda, Hiroyuki
16-1 Maehara
Nishiki-machi
Iwaki-shi Fukushima-ken(JP)**
Inventor: **Abe, Hikonori
78-21 Hananoi
Nishiki-machi
Iwaki-shi Fukushima-ken(JP)**
Inventor: **Funabashi, Masayuki
Tsurumaki
Takakura-machi
Iwaki-shi Fukushima-ken(JP)**

(74) Representative: **Woods, Geoffrey Corlett et al
J.A. KEMP & CO.
14 South Square
Gray's Inn
London WC1R 5EU (GB)**

EP 0 364 297 B1

## Description

The present invention concerns a process for the preparation of porous carbon electrode substrates for fuel cells.

As a process for producing a porous carbon plate, there has been known a method of impregnating a sheet obtained from a mixture of organic fibers for carbon fibers and pulp by a paper making process with a solution of an organic polymer (binder) containing carbonaceous powder such as graphite or carbon black suspended therein and then calcining and carbonizing the impregnated sheet (refer, for example to JP-A-61-236,664 (1986)). There has further been known a method of impregnating a sheet obtained from a mixture of organic fibers for carbon fibers, pulp and carbon powder such as graphite or carbon black by a paper making process with a solution of an organic polymer (binder) and then calcining and carbonizing the impregnated sheet (refer, for example, to JP-A-61-236,665 (1986)).

However, these known processes involve drawbacks that the processing is troublesome due to necessity of two steps, that is, a paper making step of preparing the sheet and a step of impregnating with the solution of organic polymer, the thickness of the resultant product is only of about 0.5 mm and, for example, in order to produce an electrode substrate for a fuel cell of 3 mm in thickness six sheets have to be stacked and pressed and, further, it is difficult to manufacture a carbon plate of a complicated shape, for example, an electrode substrate provided with ribs for forming flow passages of reactant gases.

Further, as a process for producing the porous carbon electrode substrate for a fuel cell, there has also been known such a process of forming a precursor sheet from a mixture composed mainly of cellulose fibers, carbonizable thermosetting resins and refined carbon particles by a paper making process, carbonizing the sheet by primary calcination and, further, calcining the carbonized product at a high temperature to graphitize carbon thereby preparing a carbon-graphite composition having a desired fine pore diameter (refer, for example, to US-A-4,738,872).

However, since it is necessary to form the precursor sheet by the paper making process also in the above-mentioned process, there are still drawbacks that it is difficult to prepare a product of an optional shape, for example, as a ribbed electrode substrate and that it is difficult to increase the thickness of the resultant electrode substrate.

The present inventors have previously invented a process for producing a porous carbon electrode substrate without the paper making process as described above (refer to US-A-4,506,028). That is, the invented process comprises steps of press-molding a mixture comprising carbon fibers, a carbonizable binder and a pore regulator (a pore forming agent) and calcining and carbonizing the resultant molded material.

This process makes it possible to prepare a desired shape, for example, a ribbed electrode substrate.

However, since the product obtained by such a process has not always been satisfactory in view of electric conductivity and thermal conductivity, a further study has been made subsequently by varying the blending ratio for the three kinds of starting materials as described above. However, it has been found difficult to further increase electric and thermal conductivities without deteriorating the sharp distribution of pore diameters and gas permeability of the product.

Then, the present inventors have made a further study to improve the process as described in US-A-4,506,028 and, as a result, have found that a porous carbon electrode substrate having sharp distribution of pore diameters and sufficient gas permeability, as well as remarkably excellent electric and thermal conductivities can be obtained by further mixing fine coke particles of a high purity with a mixture comprising the carbon fibers, carbonizable binder and pore regulator, molding the resultant mixture and then calcining and carbonizing the molded material, and thus, the present invention was accomplished based on this finding.

Although detailed mechanism of attaining such a remarkable improvement in electric and thermal conductivities has not yet been clear, it is generally presumed as below.

(1) Since carbon derived from the binder such as a phenol resin is difficult to be graphitized by nature, even if the molded material thereof is calcined at 2000°C, electric conductivity and thermal conductivity of the product are not sufficiently improved. However, according to the process of the present invention, carbon derived from the binder and newly added coke particles are integrated to form a carbon skeleton of the product, and

(2) Since coke particles showing no thermal deformation upon molding are added, short carbon fibers used as the other carbon filler are oriented more irregularly in a three dimensional space as compared with a conventional product to which such coke particles are not added.

Accordingly, the present invention provides a process for producing a porous carbon electrode substrate for a fuel cell, which substrate has (1) a porosity of from 50 to 80%, (2) a pore distribution rate of not less than 70%, where the pore distribution rate is the proportion (%) of the pore volume attributable to pores having a diameter of from 15 to 60 $\mu$m relative to the total pore volume when the pore volume is measured by a mercury porosimeter, (3) a specific gas permeability of from 40 to 500 ml/cm.hr.mmAq, (4) a volume resistivity of not greater than 20 m$\Omega$.cm and (5) a thermal conductivity of not less than 8.37kJ/m.hr.$^\circ$C (2 kcal/m.hr.$^\circ$C), said process comprising (i) mixing from 5 to 20% by weight of short carbon fibers having an average diameter of from 5 to 20 $\mu$m and a length of from 0.005 to 2.5 mm, from 15 to 30% by weight of coke particles having an average particle diameter of from 8 to 50 $\mu$m and a carbon content of not less than 97% by weight, from 20 to 40% by weight of a binder having a carbonizing yield of from 40 to 70% by weight upon calcination at 900$^\circ$C and from 30 to 60% by weight of a pore forming agent having a carbonizing yield of not greater than 10% by weight upon calcination at 900$^\circ$C, (ii) press-molding the resultant mixture under heating, and (iii) thereafter, calcining and carbonizing the molded material in an inert atmosphere and/or under a reduced pressure at a temperature of from 800 to 3000$^\circ$C.

A porous carbon electrode substrate for a fuel cell can therefore be obtained which is of low cost, high quality, in particular high electric conductivity and thermal conductivity, and has a sharp distribution of pore diameters and excellent gas permeability.

The present invention concerns a process for producing a porous carbon electrode substrate for a fuel cell, by mixing short carbon fibers, coke particles, a binder and a pore forming agent, molding the mixture, and calcining and carbonizing the molded material and, further, concerns the porous carbon electrode substate possessing excellent resistance to chemicals, strength, electric conductivity, thermal conductivity, uniform pore size distribution and gas permeability, obtained by the process as mentioned above.

The constituent factors in the present invention will be explained more specifically.

The carbon fibers used in the present invention are short fibers having an average diameter of 5 to 20 $\mu$m and a length of 0.005 to 2.5 mm and prepared, for example, from petroleum-derived pitch, coal-derived pitch, polyacrylonitrile or rayon.

If the fiber length exceeds 2.5 mm, the fibers are entangled with each other into a pill-like shape in the step upto the molding and as a result, desired porosity and pore size distribution are not obtained. On the contrary, if the fiber length is below 0.005 mm, required strength can not be obtained.

The linear contraction rate of the carbon fibers when they are calcined at 2000$^\circ$C is preferably within a range from 0.1 to 3.0%. If the linear contraction rate is excessive, there is a fear that cracks may possibly be generated in the product during calcination of the molded material. Accordingly, it is possible to produce a large-sized electrode substrate when carbon fibers having the linear contraction rate within the above-mentioned range are used.

The average diameter of the carbon fibers is a number average value of diameters of 50 fibers measured by a microscope, and the fiber length of the carbon fibers is determined by actually measuring the fiber length on a microscopic photograph of the carbon fibers (of a predetermined magnifying ratio) and then correcting the value of length by the magnifying ratio. The method of measuring the linear contraction rate of the carbon fibers is as described below.

That is, a bundle of fibers is heated at a temperature raising rate of 750$^\circ$C/hr in an inert atmosphere up to 2000$^\circ$C and maintained at the temperature for 30 min. and spontaneously cooled. Then the contraction rate is calculated by measuring the length of the fiber bundle before and after heating.

Further, the amount of the short carbon fibers used is from 5 to 20% by weight based on the total amount of the mixture of starting materials.

Then, it is necessary that the coke particles used in the present invention are pulverized to an average particle diameter of 8 to 50 $\mu$m, preferably, 8 to 40 $\mu$m when measured by an apparatus for measuring particle size distribution by centrifugal sedimentation method and have a carbon content in the constituent elements of not less than 97% by weight when measured by an element analyzer. An average particle diameter in excess of 50 $\mu$m is not preferred since the mechanical strength of the resultant product is lowered below the strength required for the electrode substrate for the fuel cell, in particular, below the lower limit of a bending strength of 6.87 MN/m$^2$ (70 kgf/cm$^2$). On the contrary, the average particle diameter below 8 $\mu$m is not preferred since the specific gas permeability of product is decreased below the lower limit (40 ml/cm.hr.mmAq) of specific gas permeability required for the electrode substrate for the fuel cell due to densification of the resultant product. Further, the carbon content in the constituent elements of not greater than 97% by weight is not desired since the volume resistivity and thermal conductivity of the product are remarkably deteriorated by the increase of content of impurities such as ash and the others. The true specific gravity of the coke particles capable of satisfying such a carbon content is, preferably, from 1.95 to 2.15 g/cm$^3$.

As the raw material for the coke particles used in the present invention, there can be mentioned (A) petroleum-derived calcined coke obtained by (1) preparing petroleum raw coke by subjecting a heavy

EP 0 364 297 B1

residue formed by distillation in petroleum refining process to heat treatment at about 500°C and (2) then further calcining the raw coke at 1200 - 1400°C, or (B) pitch coke which is coal derived calcined coke of low ash content obtained by calcining coal tar pitch at 1200 - 1400°C.

In the present invention, the above-mentioned coke particles are added by 15 to 30% by weight to the starting material composition. If the addition rate is less than 15% by weight, desired electric and thermal conductivities can not be obtained in the product. On the contrary, if the addition rate exceeds 30% by weight, desired porosity, pore diameter distribution and specific gas permeability can not be obtained in the product.

Further, a ratio of the weight of the coke particles to the weight of the above carbon fibers used as the starting material is preferably from 1.0 to 3.0.

Referring to the binder used in the present invention, it is necessary that it has a carbonizing yield of 40 to 70% by weight so that it can serve as a carbonaceous binder bonding the carbon fibers to the coke particles after carbonization and desired porosity is obtained in the product. As the binder for such a purpose, there can be mentioned phenol resin, coal-derived and/or petroleum-derived pitch, furfuryl alcohol resin or mixture of two or more thereof.

In particular, a phenol resin alone or a mixture of the phenol resin and powdery pitch is most preferred upon dry mixing the starting materials, and the resultant electrode substrate is excellent in properties.

The method of measuring the carbonizing yield is according to JIS M 8812-1963. The carbonizing yield of the binder obtained by this method is, for example, as shown below, with no particular restriction onto this value.

Phenol resin: 56%

Mixture of 35% by weight of pitch and 65% by weight of phenol resin: 67%

The mixing ratio of the binder as the starting material is 20 to 40% by weight. If it is less than 20% by weight, the strength of the resultant electrode substrate is poor since the amount is insufficient as the binder. Further, if the mixing ratio exceeds 40% by weight, desired pore diameters and porosity can not be obtained.

Then, it is necessary that the pore forming agent used in the present invention has a carbonizing yield of not greater than 10% by weight upon calcination at 900°C. Further, it is preferred that the pore forming agent is a granular organic thermoplastic polymer which contains granules having a diameter of 30 to 300 μm in an amount of more than 70% by weight based on the total amount of the granules when measured by the apparatus for measuring particle size distribution by centrifugal sedimentation method and which is neither melted nor evaporated by heating up to 100°C. That is, the polymer is allowed to deform but should not evaporate or melt-flow at a molding temperature and under a molding pressure. With the reasons as described above, preferred granular organic polymer is, for example, polyvinyl alcohol, polyvinyl chloride, polyethylene, polypropylene, polymethylmethacrylate and polystyrene.

If the carbonizing yield of the pore forming agent exceeds 10%, control of the porosity and pore diameter of the product becomes difficult.

The method for measuring the carbonizing yield of pore forming agent is according to JIS M 8812-1963 and is the same as that of the binder. Examples of the carbonizing yield for each of the granular polymers as measured by this measuring method are shown below. However, the values for the carbonizing yield are not necessarily restricted to the following values.

| (1) Polyvinyl alcohol | 0.9% |
| (2) Polypropylene | 0.8% |
| (3) Polyvinyl chloride | 5.6% |
| (4) Polyethylene | 0.1% |
| (5) Polystyrene | 1.0% |
| (6) Polymethylmethacrylate | 0.8% |

The addition rate of the pore forming agent is selected within a range of 30 to 60% by weight depending on the desired porosity and pore diameter of the electrode substrate. If the addition rate is below 30% by weight or in excess of 60% by weight, the desired porosity, pore diameter and distribution ratio thereof can not be obtained. Further, an addition rate in excess of 60% by weight is not preferred since the strength of the substrate is lowered.

A process for producing a porous carbon electrode substrate for a fuel cell according to the present invention will be concretely explained below.

4

Short carbon fibers having an average diameter of 5 to 20 $\mu$m each cut to a length of 0.005 to 2.5 mm, coke particles pulverised to an average particle diameter of 8 to 50 $\mu$m, a binder and a pore forming agent are placed each in a predetermined amount into a mixing device and mixed under stirring until they are uniformly mixed.

In this case, there is a fear that the temperature of mixed materials is raised due to the friction heat therebetween and the binder is hardened. So, it is preferred that the mixing is conducted at a temperature not higher than 60°C.

The mixing apparatus is, usually, an ordinary blender provided with a blade.

The thus obtained uniform mixture is press-molded by means of a metal mold press or a continuous press using a roller, etc. at a temperature and under a pressure appropriately set in accordance with the desired size, thickness and shape of electrode substrate. The molding is conducted in accordance with the desired shape of the electrode substrate such as a usual plate-like shape, or a plate-like shape having ribs forming flow passages of reactant gases.

The excessive lowering of the molding temperature is not preferred in view of productivity because it takes a long time for the hardening of the binder. Further, if the molding pressure is excessively low, there are formed portions which are incompletely bonded with the binder and which generate layered cracks in the molded product. Accordingly, it is preferred that the molding temperature, the molding pressure and the molding time upon press molding or roll molding are 80 to 180°C, 1 to 100 kgf/cm$^2$G and 1 to 60 min., respectively.

Further, after the molding, the molded material is usually post-cured. The post-cure is carried out, preferably, at a temperature of 80 to 180°C and under a pressure of 0.11 to 0.20 MPa (0.1 to 1 kgf/cm$^2$G) for 30 min. to 10 hours.

After the completion of the post-cure, the molded material is preferably interposed between graphite plates under pressure, and then calcined and carbonized in a furnace in an inert atmosphere and/or a reduced pressure at a temperature of 800 to 3000°C, to obtain a desired electrode substrate. The thus obtained electrode substrate of the present invention has:

(1) a porosity of 50 to 80%,

(2) a pore distribution rate of not less than 70%, where the pore distribution rate is the rate (%) of the pore volume of pores havnig a diameter of 15 to 60 $\mu$m to the total pore volume when the pore volume is measured by a mercury porosimeter,

(3) a specific gas permeability of 40 to 500 ml/cm.hr.mmAq,

(4) a volume resistivity of not greater than 20 m$\Omega$.cm, and

(5) a thermal conductivity of not less than 2.32 W/m.k (2 kcal/m.hr.°C).

Since the electrode substrate according to the present invention has extremely excellent physical properties as described above and usually has a bending strength of practically sufficient value such as not less than 6.87 MN/m$^2$ (70 kgf/cm$^2$), it is suitably used for a fuel cell.

The properties of the electrode substrate are measured by the following methods.

Specific gas permeability:

While passing an air through an electrode substrate having gas permeation section area S(cm$^2$) and thickness t(cm) from one face of the electrode substrate to the another face thereof at a constant flow rate Q(ml/hr), the differential pressure of air $\Delta$P(mmAq) between the both faces is measured, and the specific gas permeability is calculated from the following equation;

Specific gas permeability (ml/cm.hr.mmAq) = Q.t/S.$\Delta$P

Porosity:
  According to JIS R 7212 - 1979
Volume resistivity:
  According to SRIS 2301 - 1969
Thermal conductivity:
  According to JIS A 1413 - 1977
Bending strength:
  According to JIS K 6911 - 1979

The first feature of the process according to the present invention resides in that products ranging from small-sized products to large-sized products, for example, of 1000 mm (length) x 1000 mm (width) x 3 mm (thickness) and further a ribbed product can be produced easily and continuously. Such a feature can not be realized in the conventional process using organic fibers and pulp for producing a porous carbon plate.

Further, the second feature of the process according to the present invention resides in that the production cost of product can be remarkably reduced by using inexpensive coke as the starting material.

Further, the third feature of the process according to the present invention resides in that the resultant carbon electrode substrate has a low volume resistivity such as not greater than 20 m$\Omega$.cm and high thermal conductivity such as not less than 2.32 W/m.k (2 kcal/m.hr.$^\circ$C). For instance, the electrode substrate according to the present invention is much more excellent in volume resistivity as compared with the electrode substrate obtained by the process disclosed in U.S. Patent No. 4,506,028 and further, also more excellent in thermal conductivity as compared with the electrode substrate disclosed in U.S. Patent No. 4,738,872. That is, the volume resistivity of the former is 21 - 35 m$\Omega$.cm (2.1 - 3.5 x 10$^{-2}\Omega$.cm) and the thermal conductivity of the latter is 1.74 W/m.k (1.5 kcal/m.hr$^\circ$C, 1.0 BTU/hr.foot.$^\circ$F).

Accordingly, since the fuel cell using the electrode substrate of particularly high thermal conductivity obtained by the present invention can render an average operation temperature higher, it is possible to obtain a higher electric potential, for example, an electric potential higher by 1.5.mV/$^\circ$C. Further, in the case of stacking fuel cell units each using the electrode substrate of such a high thermal conductivity, it is possible to reduce the intercooler number in the cell stack.

The present invention will be explained below referring to examples, but it should be understood that the present invention is not restricted only to these examples.

## Example 1

6.2% by weight of pitch-derived short carbon fibers having an average diameter of 16 $\mu$m and a length of 0.016 to 2 mm, 19.6% by weight of calcined pitch coke (99.1% in carbon content) which entirely passed through a JIS standard sieve of 0.074 mm in sieve opening and was pulverized so as to have an average particle diameter of 34 $\mu$m when measured by an apparatus for measuring particle size distribution by centrifugal sedimentation method, 20.8% by weight of a powdery phenol resin as a binder, and 29.7% by weight of polyvinyl alcohol, 2.9% by weight of polyethylene and 20.8% by weight of polymethylmethacrylate as a pore forming agent were uniformly mixed in a blade type mixer, the resultant mixture was supplied to a metal mold and molded under the conditions of molding temperature of 140$^\circ$C, molding pressure of 1.57 MPa (15 kgf/cm$^2$G) and molding retention time of 20 min., and the resultant molded material was post-cured and then calcined and carbonized at 2000$^\circ$C in a vacuum furnace.

The size of the thus obtained electrode substrate was 200 mm in length, 200 mm in width and 1.8 mm in thickness.

The property and the blending ratio of the coke used in this example and physical properties of the resultant product are shown in Table-1.

## Comparative Example 1

An electrode substrate was produced by the same procedures as in Example 1 except for using the short carbon fibers described above instead of the coke particles.

That is, Table-1 shows the physical property of the resultant product obtained by using 25.8% by weight of the short carbon fibers corresponding to the total amount of the short carbon fibers (6.2% by weight) and coke particles (19.6% by weight) in Example 1.

As apparent from Table-1, the product obtained without using the coke was remarkably poor in both volume resistivity and thermal conductivity as compared with the product according to the present invention.

## Comparative Example 2

An electrode substrate was produced by the same procedures as in Example 1 except for using petroleum raw coke with less carbon content (yielded in Burma, carbon content 94.8%) instead of the calcined coke (carbon content 99.1%).

Table-1 shows physical properties of the resultant product.

As apparent from Table-1, the product using the raw coke with less carbon content as the starting material was remarkably poor in both volume resistivity and bending strength as compared with the product according to the present invention.

Example 2 and Comparative Examples 3 and 4

Three types of electrode substrates were produced by the same procedures as in Example 1 except for using three types of calcined cokes having different average particle diameter (obtained by pulverizing calcined pitch coke of 99.1% in carbon content used in Example 1), instead of coke used in Example 1.

Example 2:

Calcined coke having an average particle diameter of 22 $\mu$m (entirely passing through a JIS standard sieve of 0.074 mm in sieve opening) was used.

Comparative Example 3:

Calcined coke having an average particle diameter of 52 $\mu$m (entirely passing through a JIS standard sieve of 0.074 mm in sieve opening) was used.

Comparative Example 4:

Calcined coke having an average particle diameter of 7 $\mu$m (entirely passing through a JIS standard sieve of 0.044 mm in sieve opening) was used.

Table-1 shows the physical properties of the resultant products.

As apparent from Table-1, the product obtained in Example 2 according to the present invention is much more excellent in volume resistivity and bending strength as compared with the product of Comparative Example 3 and it showed no drawback that the specific gas permeability is too small as the electrode substrate for a fuel cell, as seen in the product of Comparative Example 4.

Further, the product according to the present invention had the porosity of 69%, the pore distribution rate of 82% and the thermal conductivity of 3.60 W/m.k (3.1 kcal/m.hr.°C), where the pore distribution rate is the rate (%) of the pore volume of pores having a pore diameter of 15 to 60 $\mu$m to the total pore volume when the pore volume is measured by a mercury porosimeter.

Table - 1

| Example or Comparative Example | Property and blending ratio of coke | | | Physical properties of electrode substrate | | | | | | |
|---|---|---|---|---|---|---|---|---|---|---|
| | Average parti-cle diameter (μm) | carbon content (%) | Blending ratio (wt. %) | Bulk density (g/cm³) | Specific gas permeability (ml/cm.hr.mmAq) | Volume resistivity (mΩ.cm) | Bending strength MN/m2 (Kgf/cm2) | Thermal conductivity W/m.K (kcal/m.hr.°C) | Porosity (%) | Pore distribution ratio (%) * |
| Example 1 | 34 | 99.1 | 19.6 | 0.57 | 102 | 17.4 | 10.2 (104) | 3.25 (2.8) | 69 | 82 |
| Comparative Example 1 | -- | -- | 0 | 0.55 | 110 | 35 | 9.2 (94) | 1.28 (1.1) | -- | -- |
| Comparative Example 2 | 34 | 94.8 | 19.6 | 0.58 | 151 | 25 | 5.9 (60) | -- | -- | -- |
| Example 2 | 22 | 99.1 | 19.6 | 0.56 | 88 | 17 | 10.3 (105) | 3.60 (3.1) | 69 | 82 |
| Comparative Example 3 | 52 | 99.1 | 19.6 | 0.55 | 126 | 21 | 6.7 (68) | -- | -- | -- |
| Comparative Example 4 | 7 | 99.1 | 19.6 | 0.54 | 36 | 14 | 9.4 (96) | -- | -- | -- |

* : The rate of the pore volume of pores having a diameter of 15 to 60 μm to the total pore volume when the pore volume is measured by a mercury porosimeter.

**Claims**

1. A process for producing a porous carbon electrode substrate for a fuel cell, which substrate has (1) a porosity of from 50 to 80%, (2) a pore distribution rate of not less than 70%, where the pore distribution

8

rate is the proportion (%) of the pore volume attributable to pores having a diameter of from 15 to 60 $\mu$m relative to the total pore volume when the pore volume is measured by a mercury porosimeter, (3) a specific gas permeability of from 40 to 500 ml/cm.hr.mmAq, (4) a volume resistivity of not greater than 20 m$\Omega$.cm and (5) a thermal conductivity of not less than 8.37 KJ/m.hr.$^{\circ}$C (2 kcal/m.hr.$^{\circ}$C), said process comprising (i) mixing from 5 to 20% by weight of short carbon fibers having an average diameter of from 5 to 20 $\mu$m and a length of from 0.005 to 2.5 mm, from 15 to 30% by weight of coke particles having an average particle diameter of from 8 to 50 $\mu$m and a carbon content of not less than 97% by weight, from 20 to 40% by weight of a binder having a carbonizing yield of from 40 to 70% by weight upon calcination at 900$^{\circ}$C and from 30 to 60% by weight of a pore forming agent having a carbonizing yield of not greater than 10% by weight upon calcination at 900$^{\circ}$C, (ii) press-molding the resultant mixture under heating, and (iii) thereafter, calcining and carbonizing the molded material in an inert atmosphere and/or under a reduced pressure at a temperature of from 800 to 3000$^{\circ}$C.

2. A process according to claim 1, wherein the coke has a true specific gravity of from 1.95 to 2.15 g/cm$^3$.

3. A process according to claim 1 or 2, wherein the pore forming agent is a granular organic thermoplastic polymer which contains granules having a diameter of from 30 to 300 $\mu$m in an amount of not less than 70% by weight based on the total amount of the granules when measured by an apparatus for measuring, particle size distribution by the centrifugal sedimentation method and which is neither melted nor evaporated under heating up to 100$^{\circ}$C.

4. A process according to claim 3, wherein the granular organic thermoplastic polymer is selected from polyvinyl alcohol, polyvinyl chloride, polyethylene, polypropylene, polymethylmethacrylate and polystyrene or a mixture of two or more thereof.

5. A process according to any one of claims 1 to 4, wherein the binder is selected from a phenol resin, petroleum-derived and/or coal-derived pitch and furfuryl alcohol resin or a mixture of two or more thereof.

6. A process according to any one of claims 1 to 5, wherein the ratio of the weight of the coke to the weight of the short carbon fibers is from 1.0 to 3.0.

7. A process according to any one of claims 1 to 6, wherein the linear contraction rate of the short carbon fibers upon calcination at 2000$^{\circ}$C is from 0.1 to 3.0%.

8. A process according to any one of claims 1 to 7, wherein the coke is petroleum-derived or coal-derived calcined coke.

9. A fuel cell in which the electrode substrate is obtainable by a process as claimed in any one of claims 1 to 8.

## Patentansprüche

1. Verfahren zur Herstellung von porösen Kohlenstoffelektroden-Substraten für Brennstoffzellen, wobei die Substrate (1) eine Porosität zwischen 50 bis 80 %, (2) eine Poren-Verteilungsrate (die dem Prozentverhältnis des auf Poren mit einem Durchmesser von 15 bis 60 $\mu$m zurückgehenden Porenvolumens gegenüber dem mittels eines Quecksilber-Porositätsmesser bestimmten Gesamtporenvolumen entspricht) von nicht weniger als 70 %, (3) eine spezifische Gasdurchlässigkeit zwischen 40 bis 500 ml/cm.h.mmAq, (4) einen Durchgangswiderstand von nicht mehr als 20 m$\Omega$.cm und (5) eine thermische Leitfähigkeit von nicht weniger als 8,37 KJ/m.h.K (2kcal/m.H.K) aufweisen, umfassend die folgenden Stufen:

(i) Mischen von 5 bis 20 Gew.-% kurzen Kohlenstoff-Fasern mit einem mittleren Durchmesser zwischen 5 bis 20 $\mu$m und einer Länge von 0,005 bis 2,5 mm, von 15 bis 30 Gew.-% Koksteilchen mit einem mittleren Teilchendurchmesser von 8 bis 50 $\mu$m und einem Kohlenstoffgehalt von nicht weniger als 97 Gew.-%, 20 bis 40 Gew.-% an einem Bindemittel mit einer Umwandlungsrate in Kohlenstoff von 40 bis 70 Gew.-% bei einer Calcinierung bei 900 $^{\circ}$C und 30 bis 60 Gew.-% an einem Porenbildner mit einer Umwandlungsrate in Kohlenstoff von nicht mehr als 10 Gew.-% bei einer Calcinierung bei 900 $^{\circ}$C,

(ii) Preßformen der erhaltenen Mischung unter Erwärmung und

(iii) danach Calcinieren und Carbonisieren des verformten Materials in einer inerten Atmosphäre und/oder unter vermindertem Druck bei einer Temperatur zwischen 800 bis 3000 °C.

2. Verfahren gemäß Anspruch 1, wobei der Koks eine wahre Dichte zwischen 1,95 und 2,15 g/cm$^3$ hat.

3. Verfahren gemäß Anspruch 1 oder 2, wobei der Porenbildner ein Granulat eines organischen thermoplastischen Polymeren ist, das im Falle der Bestimmung der Teilchengrößenverteilung durch die Zentrifugal-Sedimentations-Methode zu nicht weniger als 70 Gew.-% bezogen auf die Gesamtgranulatmenge, aus Teilchen mit einem Durchmesser zwischen 30 bis 300 $\mu$m besteht und das beim Erwärmen auf bis zu 100 °C weder schmilzt noch verdampft.

4. Verfahren gemäß Anspruch 3, wobei das als Granulat vorliegende organische thermoplastische Polymer aus Polyvinylalkohl, Polyvinylchlorid, Polyethylen, Polypropylen, Polymethylmethacrylat und Polystyrol oder einer Mischung aus zwei oder mehreren davon ausgewählt ist.

5. Verfahren gemäß einem jeden der Ansprüche 1 bis 4, wobei das Bindemittel aus einem Phenolharz, einem vom Petroleum und/oder Kohlenteer abgeleiteten Pech und einem Furfurylalkoholharz oder einer Mischung aus zwei oder mehreren davon ausgewählt ist.

6. Verfahren gemäß einem jeden der Ansprüche 1 bis 5, wobei das Verhältnis vom Gewicht des Kokses zu dem Gewicht der kurzen Kohlenstoff-Fasern 1,0 bis 3,0 beträgt.

7. Verfahren gemäß einem jeden der Ansprüche 1 bis 6, wobei die lineare Volumenschrumpfung der kurzen Kohlenstoff-Fasern bei der Calcinierung bei 2000 °C zwischen 0,1 und 3,0 % beträgt.

8. Verfahren gemäß einem jeden der Ansprüche 1 bis 7, wobei der Koks vom Petroleum oder aus der Kohlecalcinierung stammt.

9. Brennstoffzelle, bei der das Elektrodensubstrat gemäß einem der in den Ansprüchen 1 bis 8 beschriebenen Verfahren erhältlich ist.

**Revendications**

1. Procédé de production d'un substrat d'électrode en carbone poreux, pour une pile à combustible, le substrat ayant :

(1) une porosité comprise entre 50 et 80 % ;

(2) un taux de distribution de pores qui n'est pas inférieur à 70 %, le taux de distribution de pores étant la proportion (%) du volume des pores qui doit être attribuée aux pores dont le diamètre est compris entre 15 et 60 $\mu$m par rapport au volume total des pores lorsque le volume des pores est mesuré au porosimètre à mercure ;

(3) une perméabilité spécifique au gaz de 40 à 500 cm$^3$/cm.h.mm d'eau ;

(4) une résistivité volumique qui ne dépasse pas 20 m$\Omega$.cm ; et

(5) une conductibilité thermique qui n'est pas inférieure à 8,37 kJ/m.h.°C (2 kcal/m.h.°C), le procédé comprenant :

(i) le mélange de 5 à 20 % en poids de fibres de carbone courtes ayant un diamètre moyen compris entre 5 et 20 $\mu$m et une longueur comprise entre 0,005 et 2,5 mm, de 15 à 30 % en poids de particules de coke ayant un diamètre moyen de particule compris entre 8 et 50 $\mu$m et une teneur en carbone qui n'est pas inférieure à 97 % en poids, de 20 à 40 % en poids d'un liant ayant un rendement de carbonisation compris entre 40 et 70 % en poids après calcination à 900°C, et de 30 à 60 % en poids d'un agent porogène ayant un rendement de carbonisation qui n'est pas supérieur à 10 % en poids lors d'une calcination à 900°C ;

(ii) le moulage sous pression du mélange résultant avec chauffage ; et

(iii) postérieurement, la calcination et la carbonisation du matériau moulé en atmosphère inerte et/ou à pression réduite, à une température comprise entre 800 et 3 000°C.

2. Procédé selon la revendication 1, dans lequel le coke a une masse spécifique vraie comprise entre 1,95 et 2,15 g/cm$^3$.

**3.** Procédé selon la revendication 1 ou 2, dans lequel l'agent porogène est un polymère thermoplastique organique granulaire qui contient des granulés de diamètre compris entre 30 et 300 $\mu$m en une quantité qui n'est pas inférieure à 70 % en poids par rapport à la quantité totale des granulés, lors d'une mesure par un appareil destiné à mesurer la granulométrie des particules par le procédé de sédimentation centrifuge, et qui n'est ni fondu ni évaporé par chauffage jusqu'à 100°C.

**4.** Procédé selon la revendication 3, dans lequel le polymère thermoplastique organique granulaire est choisi Parmi l'alcool polyvinylique, le chlorure de polyvinyle, le polyéthylène, le polypropylène, le polymétacrylate de méthyle, le polystyrène et des mélanges d'au moins deux de ces polymères.

**5.** Procédé selon l'une quelconque des revendications 1 à 4, dans lequel le liant est choisi parmi une résine phénoligue, un brai dérivé du pétrole et/ou dérivé du charbon et, une résine d'alcool furfurylique et des mélanges d'au moins deux de ces liants.

**6.** Procédé selon l'une quelconque des revendications 1 à 5, dans lequel le rapport du poids du coke au poids des fibres de carbone courtes est compris entre 1,0 et 3,0.

**7.** Procédé selon l'une quelconque des revendications 1 à 6, dans lequel le taux de contraction linéaire des fibres de carbone courtes lors de la calcination à 2 000°C est compris entre 0,1 et 3,0 %.

**8.** Procédé selon l'une quelconque des revendications 1 à 7, dans lequel le coke est un coke calciné dérivé du pétrole ou dérivé du charbon.

**9.** Pile à combustible dans laquelle le substrat d'électrode peut être obtenu par un procédé selon l'une quelconque des revendications 1 à 8.